# EUROPEAN PATENT APPLICATION

(11) **EP 0 976 933 A1**
(43) Date of publication of application: **02.02.2000**
(21) Application number: 99305849.4
(22) Date of filing: 23.07.1999
(51) Int. Cl.: F16B 13/14, E04G 21/32, F16L 5/00, E04G 5/04

(54) **Improvements relating to masonry fittings**

(30) Priority: 25.07.1998 GB 9816155
(71) Applicant: International Intec Trading, 9490 Vaduz (LI)
(72) Inventor: James, Peter John, South Wales, NP16 6QP (GB); Sobek, Peter, 63322 Rodermark, Frankfurt (DE)
(74) Representative: Lainé, Simon James

(57) **Abstract**

A masonry fitting has a tubular member (6,15,23,31) enveloped by a fabric sleeve (9,17,27,32). The interior of the tubular member (6,15,23,31) has an elements (8,20,21,26,33) to which a bolt or hook (1,22,28) can be attached or through which a pipe (30) or cable can pass to be located thereby. This element is well within the tubular member (6,15,23,31) so that the bolt (1,28), hook (22), pipe (30) or cable passes freely out of that member without engaging its mouth. The fitting is secured by injecting grout (12) into the sleeve (9,17,27,32), which expands against the wall of a drilling into which the fitting is inserted. With a cavity wall, the sleeve (9,17,27,32) can bulge out behind the outer skin (11). A blind drilling is made non-cylindrical to provide a key for the hardened grout (12) and the outside of the tubular member (6,15,23,31) also keys to or has positive engagement with the hardened grout (12).

## Description

This invention relates to masonry fittings. It is particularly concerned with eye bolts set into the outside of buildings, adjacent high windows, to which cleaners or other workmen can attach their harnesses. These must be robust and very secure, since if called into action, as it were, they must sustain a severe jerk as a body is suddenly arrested in its fall. But it is adaptable to other bolts or elements that need to be attached to or extend through walls.

To comply with BS 7883:1997 anchorages for double skin brick walls, either with or without a cavity, generally penetrate through the outer skin into and sometimes through the inner skin. The latter is unsatisfactory as it spoils the finish of the wall inside.

It is the aim of this invention to provide a shorter anchorage, but one which is no less secure.

According to one aspect of the present invention there is provided a masonry fitting comprising a tubular member enveloped by a fabric sleeve with means for admitting grout to one end thereof to expand the sleeve against the inside of a drilling in a wall, the interior of the tubular member being adapted to retain or locate a member to be attached to or guided through a wall.

In one preferred form the tubular member has an outwardly projecting flange at at least one end to axially confine the fabric envelope. The means for admitting grout will generally be at the opposite end.

The tubular member can be internally equipped with means for retaining a bolt. This may be a plug fixed at or integral with one end of the tubular member into which the shank of a bolt entered from the opposite end can be screwed. Alternatively, it could be a bush with a ball and socket engagement with the interior of the tubular member. Advantageously in that case, the tubular member is deformed at an intermediate zone from a true cylinder to provide the socket, the exterior surface of the tubular member thereby forming a mechanical key to be engaged by the hardened grout. The bush may either have a plain passage therethrough to receive the shank of a bolt, which is secured by a nut on the opposite side of the bush from the bolt head, or a screw threaded passage into which the threaded shank of a bolt can engage.

In the most likely embodiment the head of the bolt will be an eye, but it could take other forms. Reference hereafter will mostly be made to eye bolts.

In another useful embodiment the tubular member is internally equipped with means for retaining a hook, and this may simply be a diametral bar.

The masonry fitting may serve as a guide rather than an anchorage. For example, the tubular member may be internally equipped with means for supporting and locating at least one pipe or cable extending therethrough.

According to another aspect of the present invention there is provided a method of securing an anchorage to a cavity wall, wherein the outer skin of the wall is drilled through, a fitting as defined above with a flange at one end of the tubular member is inserted in the drilling, said one end first, the fitting being long enough for the flange at said one end, of slightly less diameter than the drilling, to emerge into the cavity, and grout is injected into the sleeve at the opposite end to expand the sleeve against the wall of the drilling and to cause the sleeve to bulge out beyond said flange and engage behind said outer skin, the grout then hardening to make the anchorage secure.

According to a further aspect of the present invention there is provided a method of securing an anchorage or a locator to a wall, wherein the wall is drilled, the wall of the drilling is made non-cylindrical, a fitting as defined above is inserted in the drilling, and grout is injected into the sleeve to expand the sleeve against the wall of the drilling, the grout then hardening to make the anchorage or locator secure.

The fabric sleeve enables some of the grout to seep through it and bond to the wall of the drilling. Preferably it is knitted and includes fibres of some elasticity so that it can deform readily, as required by these methods.

For a better understanding of the invention, one embodiment will now be described, by way of example, with reference to the accompanying drawings, in which:
Figure 1 is a vertical axial section of a eye bolt anchorage,
Figure 2 is a similar section of an alternative anchorage,
Figure 3 is a similar section of an anchorage for a hook, the section showing two alternative engagements between the anchorage and wall,
Figure 4 is a similar section of another anchorage, and
Figure 5 is a similar section of a pipe locator.

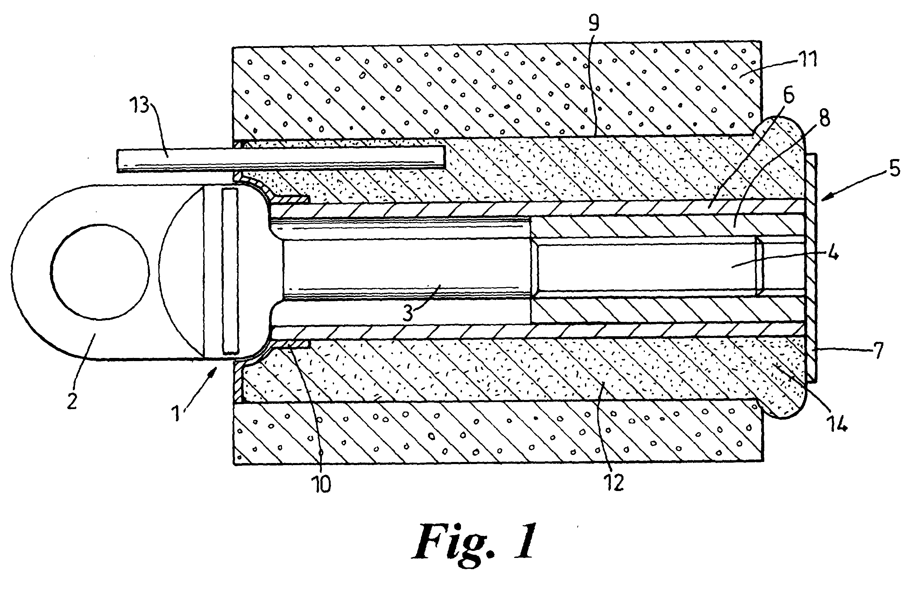

In Figure 1 an eye bolt 1 has an eye 2 and a shank 3 with its end portion 4 remote from the eye 2 (the distal end) screw threaded. An anchor body 5 is engaged by the portion 4 and shrouds the entire shank. The body 5 comprises a tube 6 with an end plate 7, of disc form and of greater diameter than the tube, welded co-axially to the distal end of the tube. Within that end there is fixed or integrally formed a plug 8 with an internal screw thread into which the portion 4 engages, leaving the rest of the tube 6 radially clear of the shank 3. The tube 6 is itself loosely encased in a fabric envelope 9 and adjacent the eye 2 it is fitted with a shaped annular cap 10 providing a countersunk mouth with a peripheral flange. The fabric is preferably knitted, and has considerable elasticity.

For use, a single brick skin 11 of a cavity wall is drilled through horizontally from outside, the size of the bore being slightly greater than the diameter of the end plate 7. The anchorage assembly is inserted distal end first until the flange of the cap 10 is flush with the outside of the wall, leaving the end plate 7 within the cavity. The bolt 1 may not be screwed fully in at this point; it may be convenient to have part of the shank 3 exposed so that it can be held by a jig or clamp to keep it coaxial within the bore for the next step.

Then grout 12 is injected via a tube 13 through the flange of the cap 10 to expand the envelope 9. It urges this out against the wall of the drilling, and some grout seeps through the fabric to bond to the brick. At the distal end, the envelope can bulge out between that end of the drilling and the periphery of the end plate 7, to create an annular rim 14. At the eye end, the cap 10 contains and locally shapes the envelope.

When the grout has set (which may be a matter of minutes) the anchorage is fast. The cylindrical grout plug cannot pull out because of the bond referred to above and the mechanical restraint of the rim 14. The body 5 is trapped by the abutment of the plate 7 against the end of the grout plug, and the eye bolt 1 is held by its screw thread. If it has been partially withdrawn during fitting, it is screwed fully in.

Further positive engagement may be provided by making the exterior of the tube 6 ribbed or with protrusions or surface texture that will key into the solidified grout.

If it is desired to make the bolt a permanent fixture (with the arrangement described it can of course be unscrewed) provision could be made for the grout to penetrate the tube 6 and fill the space around the shank 3 between the eye 2 and the nut 8. However, it will generally be preferred to leave this space free. If the bolt is called into use and there is a sudden very forceful jerk applied to it transversely to the shank, the outer face of the brickwork will not be at risk of being flaked off. The forces are concentrated well inside the wall.

The cylindrical surface area of the drilling in the single outer skin can be at least as large as that of a drilling through the inner and outer skins of a cavity wall, whose diameter is conventionally only marginally greater than that of the shank of the bolt which it is to accommodate. Quite apart from the mechanical restraint afforded by the rim 14, therefore, the grout plug has a very substantial interface with the wall of the drilling, increasing the holding power comfortably to meet the British Standard.

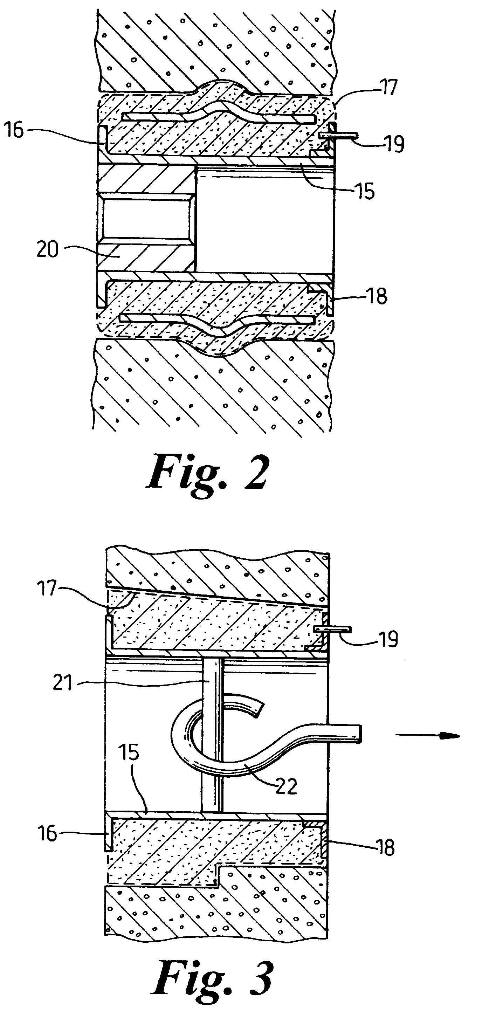

Of course, not all walls are cavity walls, and it may still be required to fix eye bolts or other devices to a non-cavity wall. Figure 2 shows how this may be done.

A blind hole is drilled of sufficient length to take a tube 15 similar to the tube 6. Its distal end has an annular plate 16 rather than a complete disc welded to it and this forms an outwardly projecting flange. The tube 15 is loosely sleeved by a fabric envelope 17 confined at the outer end by a cap 18 similar to the cap 10. The drilling is not left as a true cylinder. In certain walls, of old brick for example, mortar may easily be removed from the cylindrical wall of the drilling to provide a key, as indicated Figure 2. But it may be necessary to cut away more solid material than old mortar, and shape the drilling to provide a mechanical retention of the anchorage additional to the bonding of the grout. For example, it may be coned as shown by the top half of Figure 3, or it may be stepped as shown by the lower half of Figure 3. In any event, once the original drilling has a definite key, grout is injected into the envelope 17 by a tube 19 through the cap 18, in the manner of Figure 1, to expand against the drilling and set hard.

The interior of the tube 15 may be fitted with a screw threaded plug 20 similar to the plug 8, but there are alternatives. It may simply have a cross-bar 21, as shown in Figure 3, which will serve as an anchorage for a hook 22.

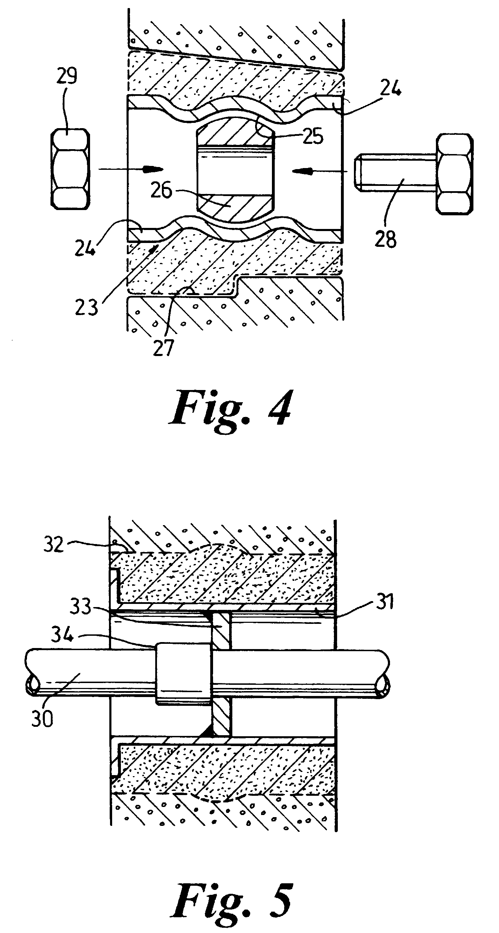

Figure 4 shows an alternative anchorage where a tube 23 and is not a true cylinder. It is shaped so that between cylindrical end portions 24 there is a part-spherical seat 25 for a bush 26 with a complementary part-spherical exterior. The tube 23 is originally cylindrical, but is deformed around the bush to make that captive in a ball and socket arrangement. The tube 23 is set into a wall in the same way as described above using a grout filled envelope 27. The deformation from the cylindrical shape makes a mechanical interlock between the solidified grout and the tube 23, rendering an end flange such as provided by the plate 7 or the plate 16 unnecessary, although one could be provided. The bush 26 can receive a bolt 28, for example, secured by a nut 29 on the distal side if the wall is drilled right through. With a blind drilling, or with a drilling through just the outer leaf of a cavity wall, the bush may have a screw-threaded aperture rather than a plain bore, and the shank of a bolt will screw into that. This arrangement gives scope for movement and it may prove useful, for example, for stays supporting projecting balconies.

These anchorages may be adapted to form means for locating a pipe 30 which has to pass through a wall, which of course then has to be drilled right through, as shown in Figure 5. A tube 31 with an enveloping fabric sleeve 32 is simply equipped with an internal bush 33 which supports the pipe 30. There are normally no significant axial forces on the tube 31 and it may appear to be unnecessary to make provision for resisting them, as with the embodiments described above. However, it is by no means unknown for mechanical diggers to hook onto buried pipes outside the buildings they serve. The pull can break the pipe or release a connection, and the nearest weak point is often inside the building. The result can be a disastrous flood or a dangerous gas leak.

Therefore, the recommended practice with the locator of Figure 5 will be to have a joint 34 immediately inside the bush 33, so that if the pipe is pulled from the outside, that joint will resist. If the pipe breaks, it will do so outside the building or at the joint, the broken end then being pulled outside. In any event, the pipe if "live" will discharge outside rather than inside the building. This of course requires the locator to be held fast in the wall and not to be susceptible to an outward pull. It will therefore be anchored in any of the ways described by filling the sleeve 32 with grout.

Figure 5 shows a tube 31 with just one service pipe 30 passing through. It will be understood that it could be enlarged and its bush 33 adapted to take two or more pipes and/or cables.

## Claims

1. A masonry fitting comprising a tubular member enveloped by a fabric sleeve with means for admitting grout to one end thereof to expand the sleeve against the inside of a drilling in a wall, the interior of the tubular member being adapted to retain or locate a member to be attached to or guided through a wall.

2. A masonry fitting as claimed in Claim 1, wherein the tubular member has an outwardly projecting flange at at least one end to axially confine the fabric envelope,

3. A masonry fitting as claimed in Claim 2, wherein the means for admitting grout is at the opposite end,

4. A masonry fitting as claimed in Claims 1, 2 or 3, wherein the tubular member is internally equipped with means for retaining a bolt.

5. A masonry fitting as claimed in Claim 4, wherein the bolt retaining means is a plug fixed at or integral with one end of the tubular member into which the shank of a bolt entered from the opposite end can be screwed.

6. A masonry fitting as claimed in Claim 4, wherein the bolt retaining means is a bush with a ball and socket engagement with the interior of the tubular member.

7. A masonry fitting as claimed in Claim 6, wherein the tubular member is deformed at an intermediate zone from a true cylinder to provide the socket, the exterior surface of the tubular member thereby forming a mechanical key to be engaged by the hardened grout,

8. A masonry fitting as claimed in Claim 6 or 7, wherein the bush has a plain passage therethrough to receive the shank of a bolt which is secured by a nut on the opposite side of the bush from the bolt head.

9. A masonry fitting as claimed in Claim 6 or 7, wherein the bush has a screw threaded passage into which the threaded shank of a bolt can engage.

10. A masonry fitting as claimed in Claim 1, 2 or 3, wherein the tubular member is internally equipped with means for retaining a hook.

11. A masonry fitting as claimed in Claim 10, wherein the hook retaining means is a diametral bar.

12. A masonry fitting as claimed in Claim 1, 2 or 3, wherein the tubular member is internally equipped with means for supporting and locating at least one pipe or cable extending therethrough.

13. A method of securing an anchorage to a cavity wall, wherein the outer skin of the wall is drilled through, a fitting as claimed in Claim 2 is inserted in the drilling, said one end first, the fitting being long enough for the flange at said one end, of slightly less diameter than the drilling, to emerge into the cavity, and grout is injected into the sleeve at the opposite end to expand the sleeve against the wall of the drilling, and to cause the sleeve to bulge out beyond said flange and engage behind said outer skin, the grout then hardening to make the anchorage secure.

14. A method of securing an anchorage or locator to a wall, wherein the wall is drilled, the wall of the drilling is made non-cylindrical, a fitting as claimed in any one of Claims 1 to 12 is inserted in the drilling, and grout is injected into the sleeve to expand the sleeve against the wall of the drilling, the grout then hardening to make the anchorage or locator secure.
